(19) Europäisches Patentamt / European Patent Office / Office européen des brevets

(11) **EP 2 982 932 B1**

(12) **EUROPEAN PATENT SPECIFICATION**

(45) Date of publication and mention
of the grant of the patent:
**18.10.2017 Bulletin 2017/42**

(51) Int Cl.:
*G01B 11/06* [(2006.01)]     *G01N 21/3581* [(2014.01)]

(21) Application number: **15000730.0**

(22) Date of filing: **12.03.2015**

(54) **MEASUREMENT OF INDUSTRIAL PRODUCTS MANUFACTURED BY EXTRUSION TECHNIQUES USING TERAHERTZ RADIATION**

**MESSUNG VON DURCH EXTRUSIONSTECHNIKEN HERGESTELLTEN, INDUSTRIELLEN PRODUKTEN MIT TERAHERTZ STRAHLUNG**

**MESURE DE PRODUITS INDUSTRIELS FABRIQUÉS AVEC DES TECHNIQUES D'EXTRUSION UTILISANT UN RAYONNEMENT TERAHERTZ**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.02.2016 Bulletin 2016/06**

(73) Proprietor: **Proton Products International Limited Beaconsfield Buckinghamshire HP9 1LW (GB)**

(72) Inventor: **Kyriaris, John
Beaconsfield, Buckinghamshire HP9 1LW (GB)**

(74) Representative: **Allsop, John Rowland
MacLeod Allsop
Wellington House
57 Dyer Street
Cirencester, Glos GL7 2PP (GB)**

(56) References cited:
**EP-A1- 2 538 200     EP-A1- 2 722 639
EP-A1- 2 752 287     US-B2- 8 638 443**

**Description**

Field of the Invention

The present invention relates to the non-contact measurement of the dimensional properties of elongated linearly extruded products such as rubber or plastic tubing, pipes and electrical cables with metallic conductor cores coated with a non-metallic insulating extruded material. It also relates to the measurement of manufactured flat products, such as rubber or plastic sheets, insulating tape, films, paper and the like.

Background of the Invention

Linearly extruded products of the type referred to above are usually manufactured in an extrusion line typically comprising a pay-off device, an extrusion machine, a cooling section and a take-up device for the completed product.

In continuous manufacturing processes of this type, to which the present invention relates, it is a requirement to measure the diameter and wall thickness of the extruded products such as tubes or pipes and in the case of electrical cables the eccentricity also, that is the off-set position with respect to coaxiality of the metallic core within the insulating coating of the cables.

The need to monitor these measurements on a continuous basis in an extrusion process is firstly to ensure specification conformity and secondly that the extruded material is being applied as economically as possible in terms of using only that amount of extrusion material absolutely necessary, thus avoiding waste.

In the prior art available at the time the present invention was conceived, these measurements were carried out by optical means using white light or laser light, but these processes are only capable of measuring the overall diameter of the extruded product. By the use of more than one device, it is possible to measure indirectly wall thickness and eccentricity. Ultra-sonic methods have also been used to measure wall thickness using water as a contact medium.

The use of radioactive beta or x-rays, enables the measurement of the wall thickness of an extruded product without contact with it. However, these methods require special handling by reason of the fact that they involve inherent health hazards as will be readily appreciated.

The invention may also be used in the industrial field of manufacturing flat products, such as, rubber or plastic sheets, insulating tapes, films, paper and the like, thereby to measure the thickness of the material and the overall width of the product being manufactured.

Prior art available in measuring flat products, includes indirect contact methods, whereby two wheels or rollers are placed above and below the product, and the difference of the readings shown by the two wheels, indicates product thickness.

A non-contact optical method has also been used, in which, two "distance measuring devices" are mounted above and below the product. The difference between the two distance readings indicates product thickness.

Both these methods suffer from inaccuracies, which include mechanical wear and wheel bounce in the case of the mechanical contact type and defocussing on the optical type, either on product vibration or product thickness change.

A further limitation of the "contact" and "optical" methods is that they measure, only the thickness along a narrow part of the product width and not the complete area of the flat product sheet.

Alternative measuring methods such as, Ultrasonic, Radioactive, beta or x-rays are not recommended, since they require special handling and therefore present an inherent health hazard as will be appreciated.

Other representative prior art may be found in European patent specifications EP 2 538 200 and EP 2 722 639 the first one of which involves the use of terahertz radiation in a film coating apparatus and method to measure coating qualities such as thickness and unevenness of coating while the latter also employs terahertz radiation for essentially the same purpose.

In US patent specification US 8 638 443, there is disclosed a method for compensating for errors in a detector signal representative of a measurement scan based on the measurement of the path length of a scanning signal passing through a spectrometer. The present invention makes use of terahertz radiation (hereinafter referred to as THz radiation) to irradiate the product as it passes through the rays on its path of travel and to utilise in a time related manner the radiation after passing through the product to determine its dimensional profile.

The frequencies of THz radiation are located between infra-red and micro-waves and the wavelengths of THz radiation are in the range between 30 micrometres and 3 millimetres.

Terahertz radiation (THz) has the advantage in that it behaves in a manner similar to that of white light, that is to say that the radiation can be reflected by mirrored surfaces but is able to penetrate and pass through dielectric or insulating materials such as rubber, paper and various plastics including polyethylene and the like.

The speed of transmission of THz radiation through the dielectric or insulating material is dependent on the chemical composition and material density of the product and this property and a penetrative ability of the THz radiation through dielectric or insulated materials will be used to obtain the measurements required.

The system disclosed herein utilises an optical system to produce a curtain of THz radiation through which the product passes in a linear fashion in its path of travel.

The transient time or speed of each successive ray in the curtain of rays is used to compute, by matrix imaging methods, the dimensional parameters of the product in particular to determine the thickness of the extrusion coating so as to ensure that the coating thickness meets operational requirements.

Uniformity of the transient times or speeds of the rays through the extruded coating are important in achieving high accuracy of the results of the measuring process.

Due to the optical components of the system in that some rays in the curtain will be travelling at different speeds than others, these transient times or speeds will differ so that the accuracy of the results obtained will vary in dependence on the position of the products in the curtain of rays which occurs due to the swaying motion of the product in its path of travel.

Object of the invention

It is an object of the present invention to obviate the problem with the optical measuring system as just described above by introducing into the measuring technique the capability to compensate for inaccuracies in transient times of the THz radiation through the extruded coating as the product moves transversely to the direction of the curtain of rays so that the results obtained are more accurate than heretofore obtainable.

Summary of the invention

According to one aspect of the present invention defined in the independent claim 1 there is provided an apparatus for measuring by non-contact, the dimensional parameters of an elongated, non-guided industrial product being extruded continuously in free space, comprising a source of terahertz radiation, a scanner system for scanning the product with a curtain of parallel rays of said radiation across the product from one side thereof, a sensor for detecting the composition of emitted radiation on the other side of the product after passage through the extrusion thereof, and an image analyser operatively associated with the sensor for performing time related imagine analysis of said emitted radiation thereby to determine said dimensional parameters characterised in that said analyser incorporates a processor for computing correction data representative of variation in the transit times between the rays crossing the product, said processor being adapted to provide time related correction signals for each ray to said analyser to equalise the transit times to a predetermined nominal value thereby to improve the accuracy of the dimensional parameters of the product being measured.

Preferred advantages and other embodiments of the invention will now be described with reference to the accompanying drawings.

Brief description of the drawings

The invention will now be described by way of example with reference to the accompanying drawings wherein;

Figure 1 is a side view of an extrusion line for manufacturing an electrical cable;

Figure 2 shows a side view of a double or triple extrusion line for coating the inner metallic core of an electrical cable;

Figure 3 illustrates the application of the invention to a tube pipe or electrical cable being extruded in a linear direction along their axes of travel;

Figure 4 shows a different view of the arrangement shown in Figure 3 wherein the travelling product is shown in cross-section better to illustrate how the parallel rays of THz radiation are produced from a single THz radiation source.

Figure 5 illustrates in schematic view an extruded product in its path of travel and being subject to measurements by means of THz radiation in accordance with the invention;

Figure 6 shows the matrix image of the cross-section of an extruded tube or pipe and in graphical form the results of the measurement of its wall thickness according to an embodiment of the invention;

Figure 7 shows similar results to those shown in Figure 6 but in this case measurement is of the overall diameter of an extruded electrical cable and the diameter of the cable core.

Figure 8 shows the cross section of a moving cable in which in Figure 8.1 the core of the cable is travelling concentrically and in Figure 8.2 the cable is non-concentric which positional eccentricity can be measured in accordance with the apparatus of the invention;

Figure 9 illustrates a device for obtaining a multiplicity of measurements of the travelling extruded product in accordance with the invention.

Figure 10 illustrates a processing unit displaying details of the measurements of an electrical cable under test including a matrix image and values of diameter wall thickness and eccentricity thereof.

Figure 11 shows a side view of a plastic extruder similar to the extruder shown in Figure 1 modified to extrude flat products.

Figure 12 illustrates a paper sheet producing line.

Figure 13.A shows an arrangement similar to Figure 5 mounted on a C-frame thereby to continuously scan the complete surface area of a flat product.

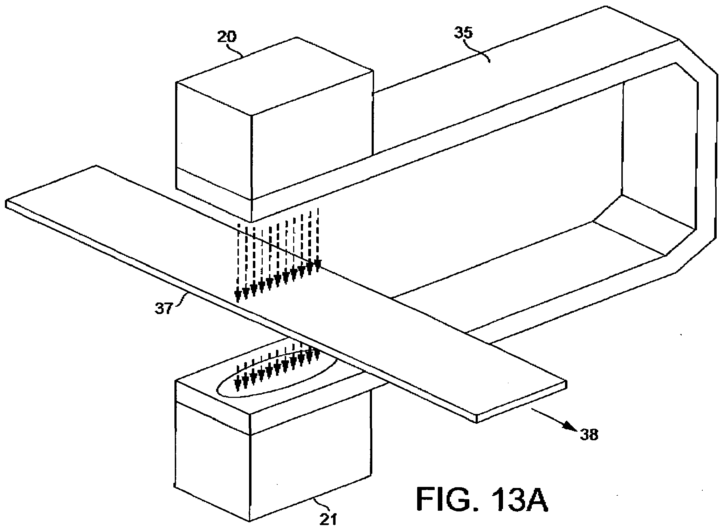

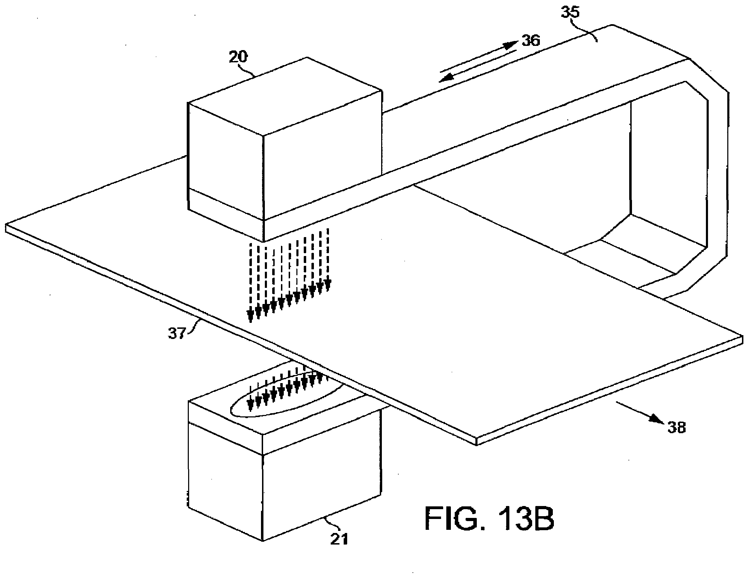

Figure 13.B illustrates the arrangement of Figure 13.A modified to cater for scanning wide products and provided with a reciprocating motion to achieve that end.

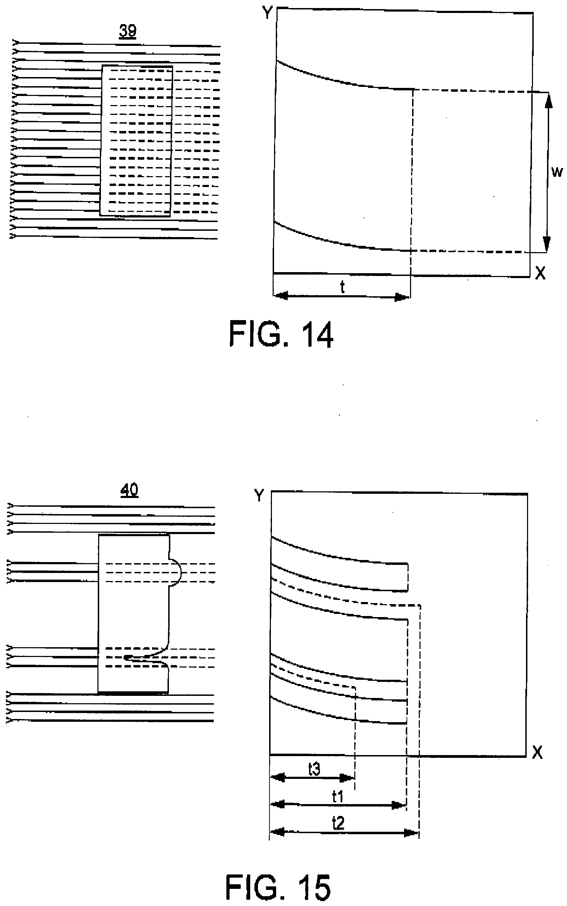

Figure 14 shows the cross-section of a product under test together with an associated matrix in graphical format thereby to enable the imaging analysis of the product and provide a measure of its width.

Figure 15 shows in graphical display the resulting analysis of the emitted Terahertz radiation (THz) from the product to provide evidence of ridges or fissures in the manufactured product, and;

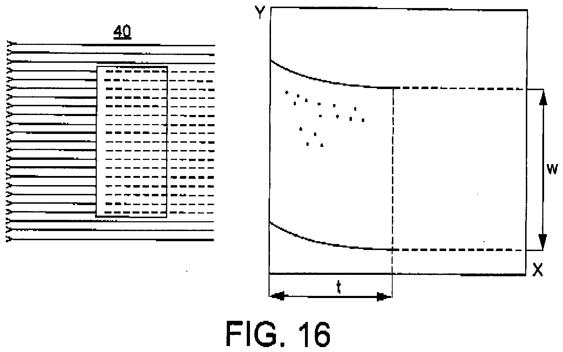

Figure 16 shows the results of imaging analysis to display contaminants in the finished product such as iron filings or sand particles and the like.

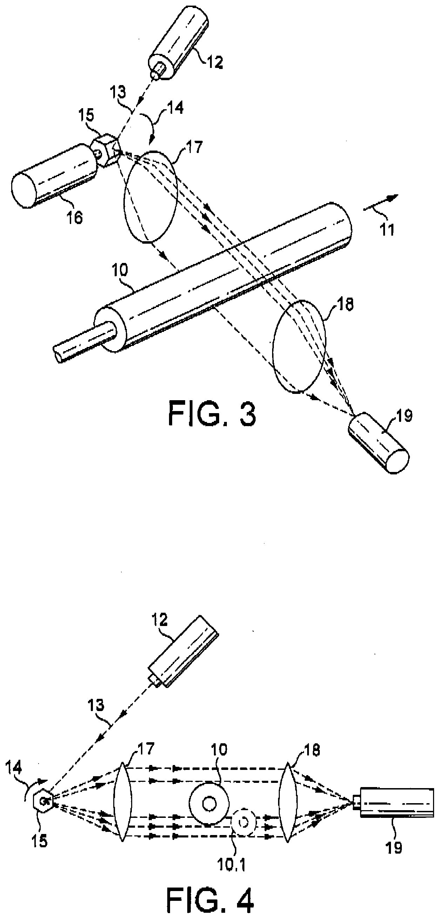

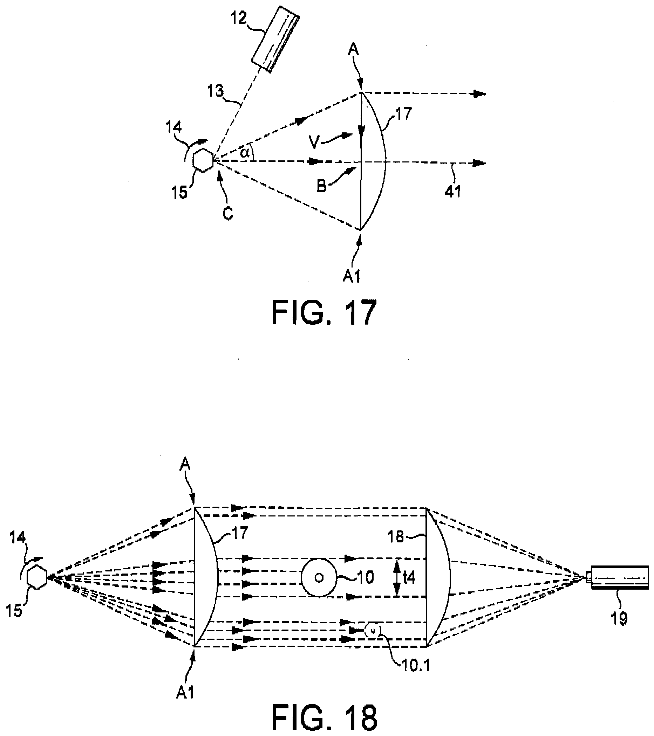

Figures 17 and 18 are views based on the arrangement shown in Figure 4 to illustrate how measurement inaccuracies occur as a result of axial movement of a travelling product in its path of travel through a curtain of parallel rays of THz radiation.

## Preferred embodiments of the invention

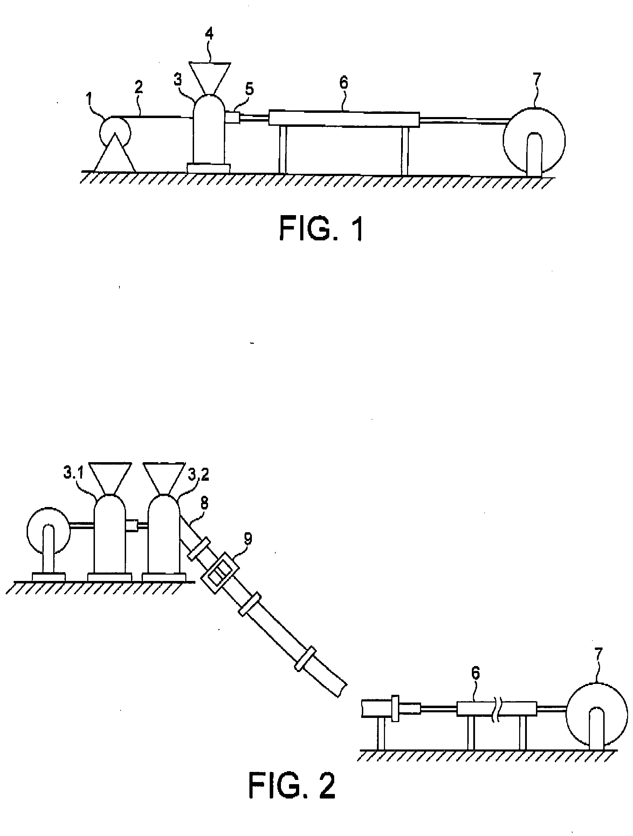

Preferred embodiments of the invention are shown in Figures 1-16 to which reference will be made to the following discussion.

Where similar parts of the apparatus to be described are used throughout the drawings, these will be referred to with identical reference numbers.

With reference to Figure 1, this illustrates an electrical cable extrusion line comprising a payoff 1 extruding a metallic conductor 2 made of copper, aluminium or steel into an extruder 3.

Rubber or plastic material is introduced into a hopper 4 in the cold state, heated in the extruder 3 which extrudes resulting hot plastics onto the metallic conductor 2 through a forming die-head 5.

The insulated cable is thereafter hauled through a water cooling section 6 and wound on take-up 7.

A non-metallic pipe or tube extrusion line is similar in many respects to a cable line but in which a payoff 1 is not required as the tube or pipe will be formed inside the extruder 3.

Measurement of cable parameters such as diameter/wall thickness and/or eccentricity will take place at positions either before or after the water cooling section 6.

In Figure 2 there is shown a double or triple extruder line 3.1, 3.2 in which two or three extrusions take place in series and at the same time.

These extrusion lines manufacture electric cables for special applications such as for use in under sea water communications or high voltage transmission cables.

In the latter case, the cable is extruded in a catenary tube 8 in which the cable installation is heat cured in a steam or nitrogen atmosphere, before it exits into the water cooling section 6 and take-up 7.

Measurements of cable parameters in these lines will take place through a specially constructed 'see through window box 9'.

To illustrate the employment of the invention in more detail, reference is made to Figure 3 in which a circular product 10 such as a tube, pipe or electric cable is shown being extruded in a linear direction along the axis of the product as shown by arrow 11.

A Terahertz (THz) radiating unit 12 provides a ray 13 directed onto a reflecting surface.

The reflecting surface is either a single-sided mirror, or one facet of a polygonal mirror drum 15 driven in a rotating manner 14 by means of an electric motor 16.

This rotation in effect scans the ray 13 across the diameter of a lens 17 which produces a curtain of parallel scans of rays across the product 10.

A lens 18 is positioned on the opposite side of the product 10 to receive the THz rays from the lens 17.

A THz sensor 19 and an imaging analysis unit (not shown) analyses the oncoming beams from lens 18.

Figure 4 is a cross-sectional view through the travelling object 10 of Figure 3, to better illustrate the passage of the THz radiation from the unit 12 to rotating mirror 15 the lenses 17, 18 and the THz sensor 19.

As will be evident from Figure 4 it is possible using the system described, to ascertain the diameter, wall thickness and /or eccentricity of the product 10 in a horizontal plain.

It is also possible as will be readily appreciated to provide a similar arrangement in which measurements may be taken in a vertical plane.

An important reason in accordance with the invention for scanning parallel THz radiation across the product 10 in its path of travel in free space, is that a measurement may take place irrespective of the position of the product 10 within the curtain of parallel rays of THz radiation, see for example position 10.1 of the product shown in Figure 4.

As alluded to, this method is useful as firstly the product does not have to be guided by contact rollers and secondly, it is important in an application where the object is in a hot state, rendering the same, difficult to guide in any manner or form.

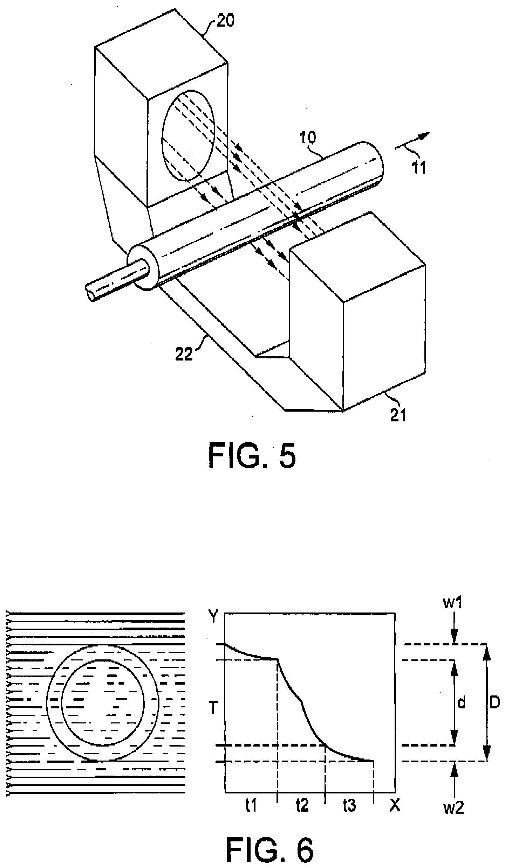

Figure 5 shows the product 10 in a position between a transmitter 20 of THz radiation and a receiver 21, mounted on a cradle base 22.

The transmitter 20 houses a THz radiation unit, the motor-driven scanning mirror drum device, 15 and lens 17 shown in previous figures, thereby to produce a parallel curtain of THz rays across the space between transmitter 20 and receiver 21.

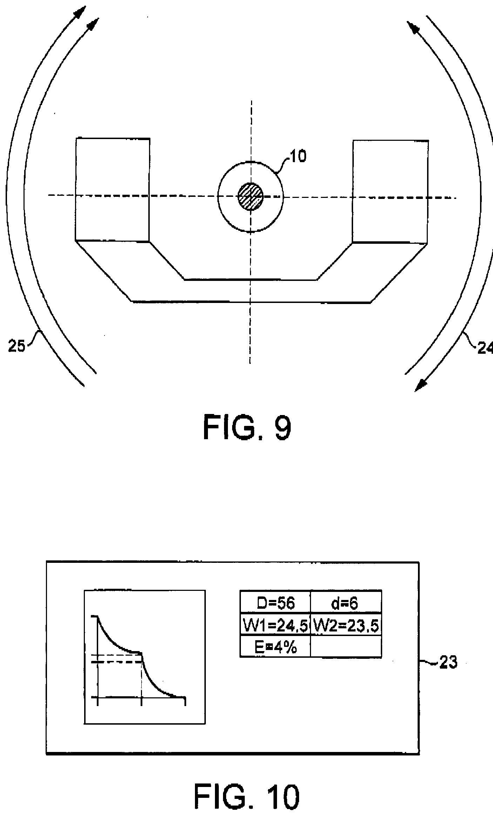

The receiver 21 houses the lens 18, THz sensor 19 and the THz imaging analysis unit circuit, determining the "transit time" of each successive THz ray through the insulating part of the product 10 under test and outputs the values on a processing unit 23 (shown in Fig 10) which is connected to receiver 21, either by wire or wireless connection.

The processing unit 23 computes the imaging analysis information and produces matrix images and values of overall diameter (D) inner diameter (d) and eccentricity (E) of the product under test, as shown in Figure 10.

In Figure 6 the results of measurement of the cross-section of a tube under test is shown in which (D) is the overall diameter (d) is the inner diameter. The horizontal X axis of the graph, displays the "transit times" of the THz radiation t1, t2, t3 and the Y axis of the graph represents the scanning time T.

The wall thickness of the tube is denoted by W1 and W2 in the vertical axis and the average thickness may be computed from the formula $\dfrac{W1+W2}{2}$

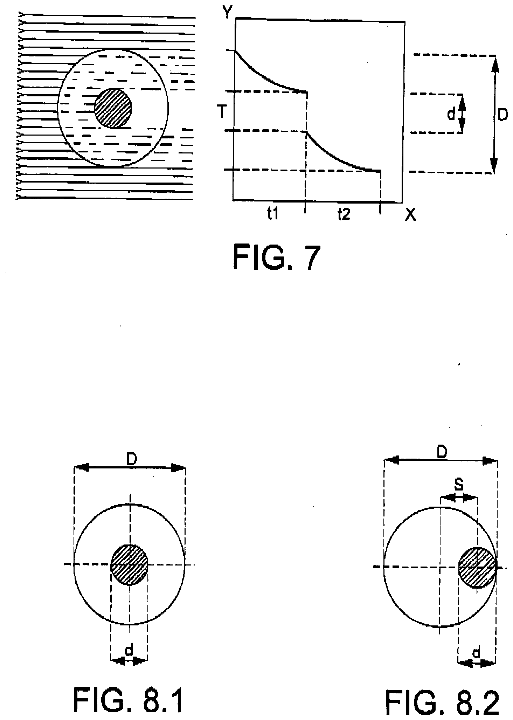

Figure 7 shows similar results to those shown in Figure 6 but wherein the cross-section is of a cable in which t1 and t2 are the "transit times" along the axis X of the graphical representation shown and the scanning rate T in the vertical axis Y.

(D) represents the overall diameter of the cable and (d) represents the electrical conductor diameter (core) of the cable under test.

Figure 8 illustrates how the cable eccentricity may be calculated, wherein cable eccentricity may be defined by the equation E= S/ (D/2-d/2) x 100 %.

Where (E) is eccentricity, (D) overall diameter, (d) is core diameter and (S) is distance between the centres of (D) and (d).

In Figure 8.1 S = 0 therefore E = 0 which means that the cable is concentric.

In Figure 8.2 S = D/2-d/2 therefore E = 1 x 100 = 100% which means that the cable has 100% eccentricity and in practice is unusable.

In a practical example let, D = 56 mm, d = 6mm and S = 1mm.

Using the eccentricity equation given above, then E = 1/25 x 100%, i.e. 4% which would be an acceptable result.

The measurements of (D), (d) and (E) are displayed on the processing unit 23 as referred to above with reference to Figure 10. In the case of correction of cable eccentricity as described, this if necessary may be achieved preferably by adjustments to the extrusion forming die-head 5.

Figure 9 shows an arrangement wherein the transmitter 20 of THz radiation and the receiver 21 for the radiation after passing through product 10 may be mounted on a rotatable cradle base 22, (see Fig 5) which is able to perform the following functions.

The cradle base 22 is able to oscillate about the centre of the travelling product 10 in a "to and fro" rotation and also in a continuous circular mode, illustrated by the arrows 24,25.

Non-contact transmission from a controller (not shown) to the imaging analysis circuit provided in the receiver 21, permits communication of all functions that are being operated in the receiver 21 as well as the transmitter 20.

The invention as described in the preceding embodiments thereof, is able to apply control functions to extrusion lines, whereby by measuring the diameter deviations, feedback can be applied to make adjustments to the extrusion line production speed, in order to maintain the diameter of the cable or tube within required specifications.

In specific cases, the extruder output may also be used for the same purpose. The cable eccentricity may be corrected as referred to already by adjustments to the forming die-head 5, of the extruder 3.

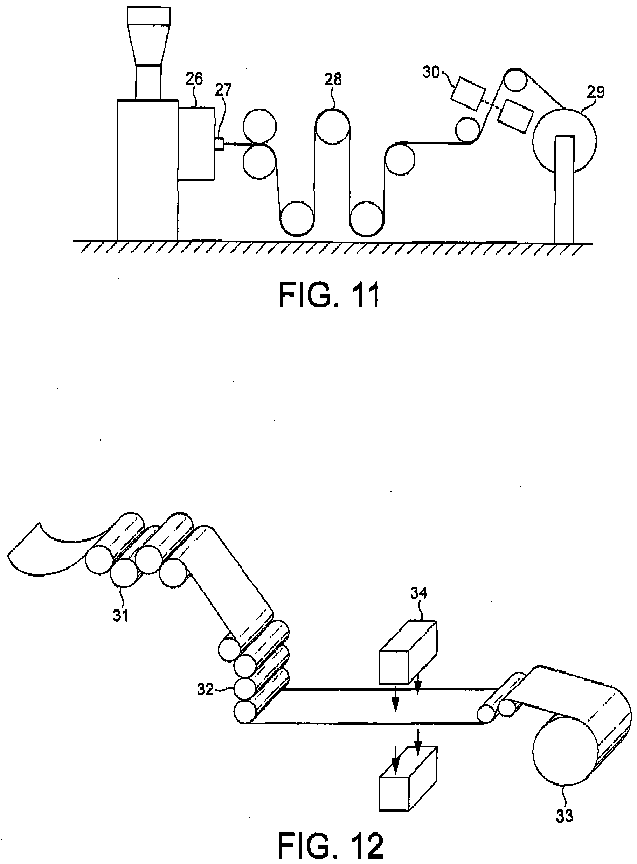

Further preferred embodiments of the invention are shown in Figures 11-16.

Figure 11, shows a side view of a plastic extruder 26 similar in operation to the extruder (3) in Figure 1 but having a modified forming die -head 27, designed to extrude flat sheets of rubber or plastic materials including, polyethylene, nylon, PVC, acrylic and the like, in varying thicknesses and widths.

The hot material exiting from forming die-head 27 enters a cooling zone 28, comprising a number of cooling rolls or calendars, which also determine the thickness of the sheet. The width of the sheet is determined by "side slitters" not shown. The sheet progresses to the take-up 29 and measurements of thickness and width, as well as quality control, may take place in position 30.

Figure 12 shows a "paper sheet producing line" whereby, paper exits from the Pulping Machine (not shown) and enters a drying zone 31 made up from heated drums. Next, the paper moves on to a coating zone 32 thereby it may be coated with various chemicals or plastic materials, depending on application requirements.

At this point, the paper is "thickness sized" by pressure rollers and the width is determined by "edge slitters" (not shown).

The finished paper sheet is wound on to a drum 33 and measurements of thickness and width and quality control, may take place in position 34.

Figure 13.A, shows an "installation" of 20-21 (transmitter/receiver, Figure 5) mounted on a C-Frame 35, whereby the curtain of parallel rays of said THz radiation (page 3 lines 9-11) thereof, is scanning continuously the complete surface area of a flat product 37, in its path of travel 38.

In this case, the span of the curtain of parallel rays of said THz radiation, is adequately wide, thereby to cope with the full width of product 37.

In applications of exceptionally wide products 37, Figure 13.B, it is possible to mount additional said "installations" 20-21 (Figure 5) on the C-frame (not shown), thereby, to provide, said complete scanning coverage, to the full width of the said product 37 under manufacture, on a continuous basis.

In practice a more economical option may be considered, thereby to provide a single "installation" 20-21 (Figure 5) on the C-Frame, as it may be adequate, particularly when, the majority of production requirements, are for product widths, which fall within the span of the curtain of parallel rays of said THz radiation.

In some applications processing wide products 37, Figure 13.B it is possible that intermittent, or random checks of dimensional parameters and or of quality control, are sufficient to ensure minimum acceptable standards for these products. In these cases a single "installation" 20-21 (Figure 5) on the C-Frame, may be employed, whereby, the said C-Frame is set, in a "Transverse Reciprocating" motion 36, across the width of the product 37, thereby, to facilitate intermittent, or randomized measuring coverage of said product.

Single or multiple "installations" 20-21 (Figure 5), are connected to the processing unit 23 (Figure 10), either by wire or preferably by wireless communication, thereby measurements of said product thickness and dimensional parameters of the flat sheet as well as quality control inspection results, are determined by imaging analysis and displayed in a matrix.

The processing unit 23 (Figure 10), can provide complete Data Logging of several lengths of products, as may be required in cases where high quality is necessary, in the performance and application of said product.

Figure 14, shows a cross section of product 39 under test, together with the associated matrix in a Graph format, whereby the thickness is represented by (t) in the X-axis and the width is represented by (w) in the Y-axis, in a similar manner to the matrix shown in Figure 6. Figure 15 shows a product 40 with defects. The resulting analysis of the time related signals are displayed in the associated matrix thereof, the X-axis shows ridges as (t2), fissures as (t3) and (t1) as the product thickness.

Figure 16, shows contaminants in the product, including iron filings or sand particles and the like, displayed as dots in the associated Matrix.

With reference to what has been described above in order to achieve high accuracy in the dimensional parameter measurements of product 10, irrespective of the position of the product 10, being anywhere within the curtain of THz parallel rays 13, the following in depth analysis of the facts will be considered. It is to be noted that the analysis of the facts applies equally to Laser or LED rays.

Figure 17 is an illustration in side view of the scanning section of the optical measuring system shown in Figure 4. For clarity purposes, let us assume that the lens 17 is of the plano-convex type, with A A1 being the diameter and B C the focal length of the lens 17.

Each successive ray 13, rotating in direction 14, comes in contact with the lens 17 at point A, whereby the lens 17 effectively "bends" the rays 13, from a rotating mode to a linear mode, thus forming a curtain of THz rays, parallel to the centreline 41.

The fact of "bending" rotating rays 13 into a parallel linear mode, results in a non-linear scanning speed (V) of each successive the ray 13, across the diameter A A1 of the lens 17.

Fig. 18 shows the optical measuring system of Figure 4 further illustrating the principle of measuring the dimensional parameters of the product 10 and the reasons why inaccuracies in dimensional measurement occur due to axial movement of the product in its path of travel.

Each successive ray 13, travelling across the diameter A A1 of the lens 17 at speed (V), will take a transit time (t4) crossing the product 10 from edge to edge.

Time (t4), is a function ($f$) of the diameter or size of the product 10, thus if (D) is the diameter or size of the product 10, then t4 =$f$ (D/V) and D= $f$ (V x t4).

The non-linear scanning speed (V) of the rays 13 travelling across the product 10, produces varying transit time periods (t4) being measured over the product 10, depending on the position of the product 10, within the curtain of parallel THz rays13, and therefore inaccurate parameter measurements for the product 10.

We will now show by an example the, errors that occur by the non-linearity of the transit speed (V) across the lens 17 from A to A1.

> Let the diameter A A1 of lens 17 = 30 mm
> the focal length B C of lens 17 = 80 mm
> the Angle between B C and A C = (a)

Considering the right angled triangle formed by A, B, C.

We have AB = BC x tan(a)

Therefore:

$$\text{Angle}(a) = \tan^{-1}(AB/BC) = \tan^{-1}(15/80) = 10.6° \text{ Degrees}$$

The scanning speed (V) of ray 13 across points A B of lens 17 is the derivative of tan(a), therefore:

$$V = d/d(a)\,(\tan(a)) = 1 / \cos^2(a)$$

Hence:

The speed of each ray 13 at point A (edge) of lens 17 is

$$(VA) = 1 / \cos^2(10.6°) = 1.035$$

The speed at point B (centre) of lens 17 is:

$$(VB) = 1 / \cos^2(0°) = 1 / (1)^2 = 1.00$$

The speed difference of ray 13 between point A (edge) and point B (centre), of lens 17 is:

$$VA\text{-}VB = 1.035 - 1.000 = +0.035$$

Therefore the speed of the ray 13 VA, is faster at the (edge) A of lens 17, than speed VB at the (centre) B of lens 17.

Due to the symmetrical disposure of lens 17, the speed of ray 13 at the other edge A1 of lens 17, VA1, will equal to VA, thus, VA1 = VA = 1.035. Therefore, the non-linearity error, in the scanning speed (V) across the diameter A, A1 of lens 17 is 3.5%.

Accordingly, as the scanning speed (V) of the rays 13, is faster towards the edges, A and A1 of the lens 17 and slower in the middle B of the lens 17, said transit time (t4) of the rays 13 across the product 10, is shorter near the edges A and A1 and longer in the middle B of the lens 17.

As the method of measurement of the diameter or size of product 10, is transit time related, the effect of shorter transit time (t4) near the edges A or A1 of the lens 17, will result in the product 10, appearing to be smaller in diameter or size.

If the product 10, is positioned near the middle B of the lens 17, it will appear to be larger, as the transit time (t4) across the product 10 will be longer.

In order to improve the accuracy in the application of this invention, the non-linearity error caused by the scanning speed (V) as shown in our previous example, must be removed.

Disclosed herein is a polynomial equation (P), consisting of the following variables and coefficients;

(e) : The angle (a) between BC and AC of the triangle ABC
(f) : The location of the product 10 within the curtain of THz rays13
(g) : The transit time period (t4) of each successive ray 13 travelling across the product 10
(h) : The physical parameters of lens 17

Items (e), (f), (g), are variable values, while (h) represents preset constant values.

The polynomial (P) calculates by software the values of (e), (f), (g) and determines a correction value (F) which is a function ($f$) of (P). Thus

$$(F) = f(P)(e, f, g, h)$$

Lens 18, receives the THz rays 13 and focuses the rays on to sensor 19 and imaging analysis unit referred to hereinbefore with reference to Figure 3, whereby the polynomial (P) is used to apply within the processing capability of the analyser unit a continuous stream of correction data to the software of the analyser unit thereby creating a correction value (F), for every successive ray 13, thus eliminating all instantaneous optical and positional errors of the product 10, travelling linearly anywhere within the curtain of THz rays.

Returning previous example of the triangle ABC, we now show how the correction is applied to this case:

(i) Speed of ray 13 at point A (edge) of lens 17, VA = 1.035 Correction to be applied (F) = 0.035 therefore corrected speed is

$$VA = 1.035 - 0.035 = 1$$

(ii) Speed of ray 13 at point B (centre) of lens 17, VB = 1 Correction to be applied (F) = 0, therefore corrected speed is

$$VB = 1 - 0 = 1$$

Hence VA = VB
Also, as pointed earlier, due to the symmetrical dispose of lens 17

$$VA = VB = VA1$$

(iii) Appropriate corrections (F) are applied to the scanning speed V of Successive rays 13, ensuring that said speed V remains linear, as the rays 13, travel across the diameter A, A1 of the lens 17.

The dimensional accuracy attained by the present invention is one (1) micron (1 micron = 1/1,000 mm) which is a considerable improvement over the accuracy obtainable with similar optical measuring apparatus known to the applicant.

Thus in US Patent 3,765,774 to Petrohilos, while there is no specific claim to any "measurement accuracy" there is a reference to "readout tolerances of +/- 0.001 inch" or 0.002 inch overall.

Converting 0.002 inch into microns, 1 inch = 25 mm, hence 0.002 inch = 0.050 mm or 50 microns much in excess of the 1 micron "tolerance" achieved by the present invention.

In view of the 1 micron accuracy, the present invention is particularly suitable in dimensional applications in the range of 80-150 microns, such as optical fibres, fine wires and the like, and also in close tolerance data transmission cables, LAN, CAT 6 & 7 and CATV, as well as in the manufacture of High Voltage Power cables.

The advantage of the present invention is further shown in flat product applications such as plastic sheets, tapes, films, paper production and the like Fig 11 and Fig 12, whereby the curtain of THz rays, in which all rays are individually of 1 micron accuracy, perform correct measurements of the flat sheet width.

**Claims**

1. Apparatus for measuring by non-contact, the dimensional parameters of an elongated, non-guided industrial product (10,37) being extruded continuously in free space, comprising a source (12) of terahertz radiation, a scanner system(15,16,17) for scanning the product(10) with a curtain of parallel rays (13) of said radiation across the products(10,37) from one side thereof, a sensor(19) for detecting the composition of emitted radiation on the other side of said product (10,37) after passage through the extrusion thereof, and an image analyser unit operatively associated with the sensor(19) for performing time related imaging analysis of said emitted radiation thereby to determine said dimensional parameters **characterised in that** said analyser incorporates a processor (23) for computing correction data representative of variation in the transit times between the rays crossing the product (10,37) due to the non-linear scanning speed (V) of the rays (13) travelling across the product (10,37), said processor being adapted to provide time related corrections signals for each ray to said analyser to equalise the transit times of the rays crossing the product (10,37) thereby to improve the accuracy of the dimensional parameters of the product (10,37) being measured.

2. Apparatus as claimed in claim 1 wherein the terahertz radiation is directed onto a rotating mirror(15), a first lens(17) for receiving successive rays of terahertz radiation from said mirror(15) to produce said curtain of parallel rays of terahertz radiation for scanning the product (10,37).

3. Apparatus as claimed in claim 1 or 2 wherein a second lens (18) is provided for receiving the terahertz radiation after passage through the product (10,37) and to focus the rays onto said sensor (19).

4. Apparatus as claimed in any preceding claim wherein said correction signals equalise said transit times to a predetermined nominal value.

5. Apparatus as claimed in claim 4, including an enclosure or catenary (8) for passage of the product (10) in its path of travel in a hostile environment of high temperature and pressure, said enclosure (8) having a transparent window box (9) to allow the passage of the terahertz radiation there through for measurement in said imaging analysis device.

6. Apparatus as claimed in claim 5 including an oscillating mechanism (22) for effecting oscillation thereof around the axis of said product(10) in its path of travel to collect a set of data relating to the diameter/wall thickness and/or eccentricity of the product (10).

7. Apparatus as claimed in claim 6 wherein said oscillation includes either a backwards and forward motion around the axis of the product (10), or a continuous rotational mode around the product (10), to log a set of data relating to the diameter, wall thickness and/or eccentricity of the product (10) under test.

8. Apparatus as claimed in claim wherein a correction device is provided for applying a corrective action to the extrusion line to vary the production speed, extruder volume output and/or adjustment of the forming die-head of the extruder either automatically or manually, in order to maintain a predetermined required product specification.

9. Apparatus as claimed in any preceding claim wherein the curtain of parallel rays of said terahertz radiation is used to scan a flat product (37), which is equal or less in width to the span width of the curtain of parallel rays of terahertz radiation, in order to inspect the complete area of the said product (37).

10. Apparatus as claimed in claim 9, which is mounted on a C-Frame (35), adapted to move reciprocally, in a transverse manner, at right angles to the linear path of travel of the elongated flat product (37), whereby a product wider than the width span of the said curtain of parallel rays of terahertz radiation, may be scanned, by moving the C-Frame (35) in a reciprocating forward and reverse motion across the width of the flat product (37).

**Patentansprüche**

1. Vorrichtung zum berührungsfreien Messen der Abmessungsparameter eines länglichen, nicht geführten industriellen Produkts (10,37), das fortlaufend in einem freien Raum extrudiert wird, aufweisend eine Quelle (12) einer Terahertz-Strahlung, ein Scannersystem (15,16,17) zum Scannen des Produkts (10) mittels eines Vorhangs paralleler Strahlen (13) der Strahlung quer über das Produkt (10,37) ausgehend von einer Seite des Produkts her, einen Sensor (19) zum Erfassen der Zusarrsmensetzung abgestrahlter Strahlung auf der anderen Seite des Produkts (10,37) nach deren Passage durch die Extrusion, und eine Bildanalysatoreinheit, die mit dem Sensor (19) zur Durchführung einer zeitbezogenen Bildgebungsanalyse der abgestrahlten Strahlung wirksam verbunden ist, um dadurch die Abmessungsparameter zu bestimmen, **dadurch gekennzeichnet, dass** der Analysator einen Prozessor (23) zur Berechnung von Korrekturdaten aufweist, die charakteristisch sind für eine Abweichung der Durchgangzeiten zwischen den Strahlen, die das Produkt (10,37) kreuzen und zwar basierend auf die nichtlineare Scangeschwindigkeit (V) der sich über das Produkt (10,37) fortbewegenden Strahlen (13), wobei der Prozessor dafür ausgelegt ist, zeitbezogene Korrektursignale für jeden Strahl an den Analysator auszugeben, um die Durchgangzeiten der Strahlen anzugleichen, die das Produkt (10,37) kreuzen, um dadurch die Genauigkeit der Abmessungsparameter des gemessenen Produkts (10,37) zu verbessern.

2. Vorrichtung nach Anspruch 1, wobei die Terahertz-Strahlung auf einen rotierenden Spiegel (15) gelenkt wird und eine erste Linse (17) zum Empfangen aufeinanderfolgender Strahlen einer Terahertz-Strahlung von dem Spiegel (15) vorgesehen ist, um den Vorhang paralleler Strahlen der Terahertz-Strahlung zum Scannen des Produkts (10,37) zu erzeugen.

3. Vorrichtung nach Anspruch 1 oder 2, **dadurch gekennzeichnet, dass** eine zweite Linse (18) zur Aufnahme der Terahertz-Strahlung nach der Passage durch das Produkt (10,37) und zur Fokussierung der Strahlen auf den Sensor (19) vorgesehen ist.

4. Vorrichtung nach einem der vorstehenden Ansprüche, wobei die Korrektursignale die Durchgangzeiten mit Blick auf einen vorbestimmten Nennwert angleichen.

5. Vorrichtung nach Anspruch 4, aufweisend eine Kapsel oder Leistung (8) für den Durchgang des Produkts (10) auf seinem Laufweg in einer aggressiven Umgebung hoher Temperatur und hohen Drucks, wobei die Kapsel (8) einen transparenten Fensterkasten (9) aufweist, um die Passage der Terahertz-Strahlung dort hindurch zur Messung in der Bildgebungsanalysevorrichtung zu ermöglichen.

6. Vorrichtung nach Anspruch 5, aufweisend einen Oszillationsmechanismus (22) zur Bewirkung einer Oszillation um die Achse des Produkts (10) auf seinem Laufweg, um einen Satz von Daten in Bezug auf den Durchmesser bzw. die Wandstärke und/oder Exzentrizität des Produkts (10) zu sammeln.

7. Vorrichtung nach Anspruch 6, wobei die Oszillation entweder eine Rückwärts- und Vorwärtsbewegung um die Achse des Produkts (10) oder einen kontinuieriichen Rotationsmodus um das Produkt (10) herum umfasst, um einen Satz von Daten zu protokollieren, die sich auf den Durchmesser, die Wandstärke und/oder die Exzentrizität des zu untersuchenden Produkts (10) beziehen.

8. Vorrichtung nach Anspruch 1, wobei eine Korrekturvorrichtung vorgesehen ist, um eine korrigierende Maßnahme auf die Extrusionslinie anzuwenden, um die Herstellungsgeschwindigkeit, Strangpressenvolumenausgabe und/oder Einstellung des formenden Schneideisenkopfes der Strangpresse entweder automatisch oder manuell zu ändern, um eine vorbestimmte gewünschte Produktspezifikation aufrechtzuerhalten.

9. Vorrichtung nach einem der vorstehenden Ansprüche, wobei der Vorhang paralleler Strahlen der Terahertz-Strahlung verwendet wird, um ein flaches Produkt (37) zu scannen, dessen Breite gegenüber der Spannweite des Vorhangs paralleler Strahlen der Terahertz-Strahlung gleich oder kleiner ist, um die gesamte Fläche des besagten Produkts (37) zu inspizieren.

10. Vorrichtung nach Anspruch 9, die an einem C-Rahmen (35) angebracht ist, der dazu eingerichtet ist, sich hin und her, in einer transversalen Weise, in rechten Winkeln gegenüber dem linearen Laufweg des länglichen flachen Produkts (37) zu bewegen, wobei ein Produkt gescannt werden kann, das breiter ist als die Spannweite des Vorgangs paralleler Strahlen der Terahertz-Strahlung, indem der C-Rahmen (35) über die Breite des flachen Produkts (37) hinweg in einer Hin- und Herbewegung bewegt wird.

**Revendications**

1. Appareil pour mesurer, par non-contact, les paramètres dimensionnels d'un produit industriel (10, 37) non guidé et allongé, ledit produit étant extrudé de façon continue dans un espace libre, ledit appareil comprenant une source (12) de rayonnement térahertz, un système de scanner (15, 16, 17) pour scanner le produit (10) avec un rideau de rayons parallèles (13) dudit rayonnement se produisant à travers le produit (10, 37) à partir d'un côté de celui-ci, comprenant un capteur (19) pour détecter la composition du rayonnement émis sur l'autre côté dudit produit (10, 37), après passage du produit ayant traversé le processus d'extrusion, et comprenant une unité d'analyseur d'images fonctionnellement associée au capteur (19), pour réaliser une analyse d'imagerie - par rapport au temps - dudit rayonnement émis, ce qui permet ainsi de déterminer lesdits paramètres dimensionnels, **caractérisé en ce que** ledit analyseur comprend un processeur (23) permettant de calculer des données de correction représentatives d'une variation concernant les temps de transit entre les rayons traversant le produit (10, 37), ladite variation étant due à la vitesse de balayage non linéaire (V) des rayons (13) traversant le produit (10, 37), ledit processeur étant adapté pour fournir audit analyseur, pour chaque rayon, des signaux de correction par rapport au temps, dans le but d'égaliser les temps de transit des rayons traversant le produit (10, 37), ce qui permet ainsi d'améliorer la précision des paramètres dimensionnels du produit (10, 37) mesuré.

2. Appareil selon la revendication 1, dans lequel le rayonnement térahertz est dirigé sur un miroir tournant (15), sur une première lentille (17) prévue pour recevoir des rayons successifs de rayonnement térahertz provenant dudit miroir (15), pour produire ledit rideau de rayons parallèles de rayonnement térahertz, dans le but de scanner le produit (10, 37).

3. Appareil selon la revendication 1 ou 2, dans lequel une deuxième lentille (18) est prévue pour recevoir le rayonnement térahertz après passage à travers le produit (10, 37), et pour focaliser les rayons sur ledit capteur (19).

4. Appareil selon l'une quelconque des revendications précédentes, dans lequel lesdits signaux de correction égalisent lesdits temps de transit, par rapport à une valeur nominale prédéterminée.

5. Appareil selon la revendication 4, comprenant une enceinte (8) pour caténaires, prévue pour le passage du produit (10) au cours de sa trajectoire de déplacement dans un environnement hostile soumis à une haute température et à une haute pression, ladite enceinte (8) ayant une boite (9) à fenêtre transparente, pour permettre le passage du rayonnement térahertz à travers ladite boîte, dans le but d'effectuer des mesures dans ledit dispositif d'analyse d'imagerie.

6. Appareil selon la revendication 5, comprenant un mécanisme oscillateur (22), pour effectuer une oscillation dudit mécanisme autour de l'axe dudit produit (10) au cours de sa trajectoire de déplacement, afin de collecter un ensemble de données concernant l'épaisseur / le diamètre de la paroi et/ou l'excentricité du produit (10).

7. Appareil selon la revendication 6, dans lequel ladite oscillation comprend soit un mouvement vers l'arrière et vers l'avant autour de l'axe du produit (10), soit un mode de rotation continue autour du produit (10), pour enregistrer un ensemble de données concernant le diamètre, l'épaisseur de la paroi et/ou l'excentricité du produit (10) sous test.

8. Appareil selon la revendication 1, dans lequel un dispositif de correction est prévu pour appliquer une action corrective à la ligne d'extrusion, dans le but de faire varier la vitesse de production, le débit de volume de l'extrudeuse et/ou le réglage de la tête de filière de formage de l'extrudeuse, soit automatiquement, soit manuellement, afin de maintenir une spécification requise prédéterminée concernant le produit.

9. Appareil selon l'une quelconque des revendications précédentes, dans lequel le rideau de rayons parallèles dudit rayonnement térahertz est utilisé pour scanner un produit plat (37) qui est égal ou inférieur, en largeur, à la largeur de portée du rideau de rayons parallèles de rayonnement térahertz, afin d'inspecter la totalité de la zone dudit produit (37).

10. Appareil selon la revendication 9, lequel appareil est monté sur un cadre (35), en forme de C, adapté pour se déplacer en mode va-et-vient, d'une manière transversale, suivant des angles droits par rapport à la trajectoire linéaire de déplacement du produit plat allongé (37), grâce à quoi un produit plus large que la largeur de portée dudit rideau de rayons parallèles de rayonnement térahertz peut être scanné en déplaçant le cadre (35), en forme de C, suivant un mouvement de va-et-vient vers l'avant et vers l'arrière, à travers la largeur du produit plat (37).

FIG. 1

FIG. 2

FIG. 3

FIG. 4

FIG. 5

FIG. 6

FIG. 7

FIG. 8.1

FIG. 8.2

**FIG. 9**

| D=56 | d=6 |
|------|-----|
| W1=24,5 | W2=23,5 |
| E=4% | |

**FIG. 10**

FIG. 11

FIG. 12

FIG. 13A

FIG. 13B

**FIG. 14**

**FIG. 15**

FIG. 16

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2538200 A
- EP 2722639 A
- US 8638443 B
- US 3765774 A, Petrohilos